Europäisches Patentamt

European Patent Office

Office européen des brevets

(11) Veröffentlichungsnummer: **0 391 112**
**A2**

## (12) EUROPÄISCHE PATENTANMELDUNG

(21) Anmeldenummer: **90105052.6**

(22) Anmeldetag: **17.03.90**

(51) Int. Cl.⁵: **A22C 25/17**

(30) Priorität: **05.04.89 DE 3910984**

(43) Veröffentlichungstag der Anmeldung:
**10.10.90 Patentblatt 90/41**

(84) Benannte Vertragsstaaten:
**ES FR GB NL SE**

(71) Anmelder: **NORDISCHER MASCHINENBAU
RUD. BAADER GMBH + CO KG
Geniner Strasse 249
D-2400 Lübeck(DE)**

(72) Erfinder: **Braeger, Horst
Auf dem Ruhm 14
D-2400 Lübeck(DE)**

(54) **Vorrichtung zum Enthäuten von Fischen.**

(57) Bei einer Enthäutevorrichtung mit einer Enthäutewalze, einem der Mantelfläche derselben unter geringem Abstand gegenüberstehenden Andruckfläche und einem dieser entsprechend angeordneten Enthäutemesser ist die Mantelfläche der Enthäutewalze durch im wesentlichen parallel zu der Achse derselben verlaufende Nuten auf die Kammflächen einer Vielzahl von Zahnstegen reduziert, wobei die Nuten bei relativ grober Teilung allgemein flach ausgeführt sind und einem Querschnitt aufweisen, dessen Tiefenmaß im Bereich der vorauslaufenden Flanke der Zahnstege maximal 0,5 mm beträgt und im Bereich der nachlaufenden Flanke größer ist.

Fig. 2

EP 0 391 112 A2

## Vorrichtung zum Enthäuten von Fischen

Die Erfindung betrifft eine Vorrichtung zum Abtragen der Haut von den Filets von Fischen mit einer umlaufend angetriebenen Enthäutewalze, deren zylindrische Mantelfläche durch im wesentlichen parallel zu der Achse der Enthäutewalze verlaufende Nuten auf die Kammflächen einer Vielzahl von Zahnstegen reduziert ist, mit einer der Mantelfläche der Enthäutewalze gegenüberstehenden Andrückfläche und einem dieser entsprechend angeordneten Enthäutemesser.

Beim Enthäuten von Fischfilets auf Enthäutemaschinen dieses Konstruktionsprinzips kommt es darauf an, einerseits einen sicheren Anschnitt zu erreichen, d. h. sicherzustellen, daß die Haut der Filets zwischen Enthäutewalze und Andrückfläche einläuft und andererseits zu erreichen, daß mit geringstmöglichem Verlust an Filetfleisch enthäutet wird. Inwieweit die letztgenannte Forderung erfüllt wird, vermag der Fachmann an der Qualität des sogenannten Silberspiegels zu erkennen, der bei den meisten Massenfisch-Arten eine Schicht zwischen Fleisch und Haut bildet. Gleichzeitig gibt das makellose Vorhandensein dieses Merkmals dem Filet ein ansprechendes Äußeres, was der Grund dafür ist, daß es vom Verbraucher als Qualitätssiegel angesehen wird.

Wie die Praxis erweist, ist die Koordinierung dieser Forderungen problematisch, da die für eine Optimierung der einzelnen Forderungen zu treffenden Maßnahmen nach dem bisherigen Erkenntnisstand jeweils den übrigen Forderungen im wesentlichen zuwiderlaufen.

Der Stand der Technik bei derartigen Vorrichtungen wird durch den Gegenstand der DE-AS 26 53 946 repräsentiert, die eine Enthäutevorrichtung der eingangs beschriebenen Art zeigt. Die Enthäutewalze ist bei diesem Konzept an ihrer Mantelfläche mit Nuten versehen, die jeweils zwischen sich einen Zahnsteg von sägezahnähnlichem Querschnitt belassen. Die Nuten weisen einen Querschnitt auf, der darauf ausgerichtet ist, dem vorauslaufenden Filetzipfel des zu enthäutenden Filets die Möglichkeit zu geben, mit der Haut unter das Enthäutemesser und unter die Andrückfläche zu gelangen.

Dabei ist zu beobachten, daß die Anschnittsicherheit mit größerer Zahnteilung wächst, gleichzeitig jedoch der Silberspiegel verloren geht.

Es entstand daher das aus der DE-PS 28 44 241 entnehmbare Konzept, bei welchem eine Enthäutewalze Verwendung findet, die eine lediglich griffig gemachte Mantelfläche aufweist, die von einzelnen Nuten unterbrochen ist. Diese sind in einem Beispiel 5 mm breit und 1,5 mm tief, also relativ flach gehalten und gewährleisten einen sicheren Anschnitt. Während mit einer derart ausgeführten Enthäutewalze in den Bereichen zwischen diesen Nuten der gewünschte Silberspiegel auf dem Filet erreicht wird, ist dieser im Bereich der Nuten je nach bearbeiteter Fischqualität und -art zumindest so reduziert, daß die Lage der Nuten an dem enthäuteten Filet erkennbar ist.

Es ist daher die Aufgabe der Erfindung, die Ausführung einer Enthäutewalze anzugeben, die sowohl einen problemlosen Anschnitt ermöglicht, als auch einen homogenen Silberspiegel erreichbar macht.

Diese Aufgabe wird erfindungsgemäß durch eine Enthäutewalze gelöst, die dadurch gekennzeichnet ist, daß die Tiefe jeder Nut im Bereich der in Drehrichtung betrachtet vorauslaufenden Flanke des Zahnsteges kleiner ist als im Bereich der nachlaufenden Flanke desselben, das Maßverhältnis aus der auf der Mantelfläche gemessenen Breite der Nuten und der Größten Tiefe derselben gleich Breite der Nuten und der größten Tiefe derselben gleich oder größer als 3:1 ist, und das Maßverhältnis aus der Breite der Kammfläche der Zahnstege und dem Kleinstmaß der Nuttiefe den Wert 2:1 nicht übersteigt, und das Kleinstmaß der Nuttiefe 0,5 mm nicht unterschreitet.

Die damit erzielbaren Vorteile bestehen insbesondere darin, daß der Nutgrund zumindest teilweise zur Stützung der Haut mit herangezogen wird. Aufgrund dieser teilweisen Stützung auch im Nutbereich ergibt sich quasi eine Reduzierung der freien Spannlänge der Haut über den unüblich breiten Nuten mit dem Effekt einer reduzierten Ausweichmöglichkeit der dort befindlichen Hautteile während des Enthäuteprozesses. Gleichzeitig steht dem ankommenden Filetzipfel aufgrund der größeren Nuttiefe im Bereich der nachlaufenden Flanke des Zahnsteges ein den Anschnitt sicherndes Aufnahmevolumen zur Verfügung.

Im Sinne der Aufgabenstellung sowie der Reinigbarkeit vorteilhafte Ausführungsmerkmale sind den Unteransprüchen zu entnehmen, wobei zu dem Merkmal der Formung der Grundfläche der Nuten aus einem elastischen Werkstoff angeführt sei, daß eine derart ausgeführte Enthäutewalze praktisch unabhängig von Fischart und -größer d. h. weitgehend universell einsetzbar ist.

Ein Ausführungsbeispiel der Erfindung wird nachfolgend anhand der Zeichnung näher erläutert. Es zeigt

Fig. 1 einen Ausschnitt aus einer der Erfindung zugrundeliegenden Enthäutevorrichtung, vereinfacht dargestellt in axonometrischer Ansicht,

Fig. 2 einen vergrößert dargestellten Querschnitt durch die Vorrichtung nach Fig. 1.

In einem nicht dargestellten Gestell einer Enthäutevorrichtung ist eine Enthäutewalze 1 gelagert und auf geeignete Weise im Sinne des Drehrichtungspfeiles 2 umlaufend angetrieben. Der zylindrischen Mantelfläche 3 der Enthäutewalze 1 liegt eine Andrückfläche 5 unter geringem Abstand gegenüber, die einem Andrückschuh 4 zugehört, dessen gegen die Drehrichtung weisende Kante als Messerschneide 6 ausgebildet ist.

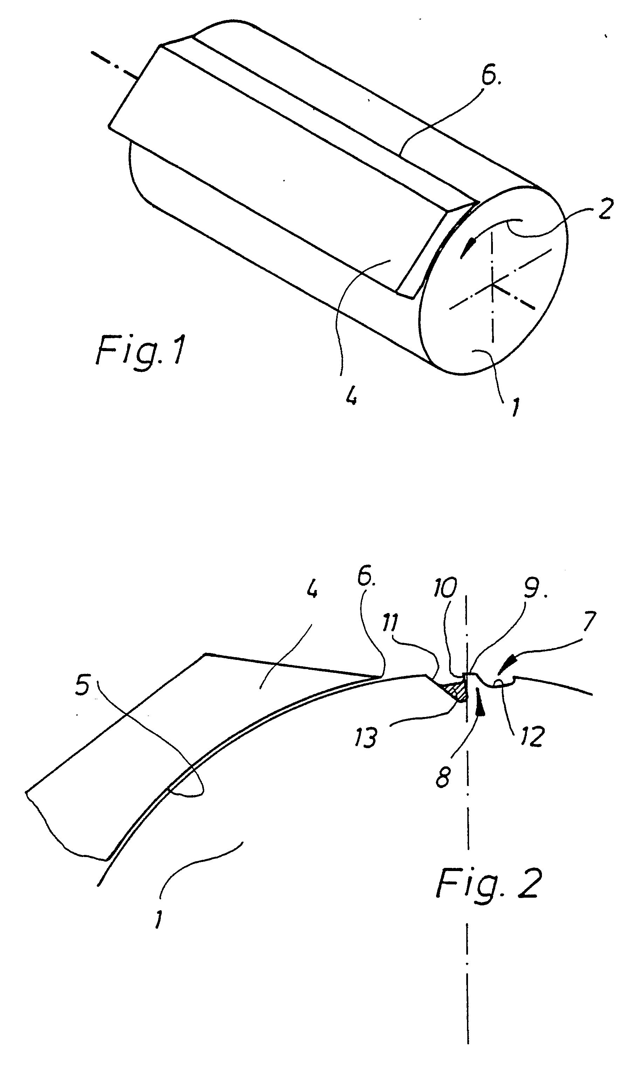

Die Mantelfläche der Enthäutewalze 1 ist mit längs der Mantellinien verlaufenden Nuten 7 versehen, wobei je zwei derselben durch einen Zahnsteg 8 voneinander getrennt sind, dessen Kammfläche 9 Bestandteil der Mantelfläche ist. Dabei bildet die vorauslaufende Flanke 10 mit der zugehörigen Kammfläche 9 einen Winkel unter 90° und die nachlaufende Flanke 11 einen solchen von größer als 90°. Jede Nut 7 weist eine Grundfläche 12 auf, die gegen die Laufrichtung der Enthäutewalze 1 geneigt ist. Die Grundfläche kann gemäß Fig. 2 durch teilweises Auffüllen von mit größerer Tiefe angelegten Nuten mit einem elastischen Werkstoff 13 , beispielsweise Silicon-Kautschuk, gestaltet werden.

Die Wirkungsweise der vorbeschriebenen Enthäutewalze ist folgende:
Ein mit der Hautseite über ein nicht gezeigtes Zuführband oder eine Rutsche auf die Mantelfläche der Ent häutewalze 1 geführtes Fischfilet wird aufgrund deren gegenüber der Zuführgeschwindigkeit höheren Umfangsgeschwindigkeit unter zum Teil dynamischem Reibschluß zwischen Enthäutewalze 1 und Filet, zum anderen Teil infolge der Schiebekraft des Zuführmechanismus' in den Bereich der Messerschneide 6 gebracht. Durch Wirkung der Schwerkraft und vermittels des an der Grenzfläche zwischen Enthäutewalze 1 und Filet aufgrund der Differenzgeschwindigkeit nach dem Tragflügelprinzip wirksamen Unterdruckes lagert sich der Filetzipfel in die Nuten 7 ein, so daß Hautteile unter die Mantelfläche der Enthäutewalze 1 geraten. Die in geringem Abstand über der Mantelfläche angeordnete Messerschneide 6 ist dadurch in der Lage, zwischen Haut und Fleisch in das Filet einzudringen. Dadurch wird gleichzeitig sichergestellt, daß eine Klemmung der Haut gegenüber der unmittelbar an die Messerschneide 6 anschließenden Andrückfläche 5 des Andrückschuhs 4 erfolgen kann und damit die weitere Förderung zustande kommt. Diese erfolgt formschlüssig und ist deshalb sehr sicher, da sich dabei die Zahnstege 8 mit ihren Kammflächen 9 in die verformbare Haut einprägen, so daß die auf diese Weise verdrängten Hautteile in die angrenzenden Nuten 7 fließen. Dieser Vorgang führt zu einer örtlichen "Verdickung" der Haut in den an die Kammfläche 9 anschließenden Bereichen und hat zur Folge, daß sich die Haut zumindest in dem flacheren Bereich des Nutquerschnitts gegenüber der Grundfläche 12 der Nuten 7 abzustützen vermag. Damit verrringert sich die freie Spannlänge der Haut über den Nuten 7 und wird deren Ausweichmöglichkeit gegenüber den Keilkräften der Messerschneide 6 nachhaltig eingeschränkt. Der Effekt ist, daß sich die Messerschneide 6 in einer weitgehend einheitlichen Schicht zwischen Haut und Fleisch bewegen kann, so daß es bei entsprechender Messereinstellung möglich ist, die Trennung der Haut zwischen dieser und dem Silberspiegel zu vollziehen.

Dieser Vorgang läßt sich praktisch unabhängig von der Dicke der Haut und Fischart bedingten Modifizierungen durchführen, wenn die Grundfläche 12 der Nuten 7 durch teilweises Auffüllen tiefer eingearbeiteter Nuten mit einem geeigneten Elastomer gestaltet wird, so daß überdicke Haut bzw. Hautteile durch entsprechende Verformung dieser Füllung in den Nuten ebenfalls Platz finden.

## Ansprüche

1. Vorrichtung zum Abtragen der Haut von den Filets von Fischen mit einer umlaufend angetriebenen Enthäutewalze, deren zylindrische Mantelfläche durch im wesentlichen parallel zu der Achse der Enthäutewalze verlaufende Nuten auf die Kammflächen einer Vielzahl von Zahnstegen reduziert ist, mit einer der Mantelfläche der Enthäutewalze gegenüberstehenden Andrückfläche und einem dieser entsprechend angeordneten Enthäutemesser,
**dadurch gekennzeichnet,**
daß
- die Tiefe jeder Nut (7) im Bereich der in Drehrichtung betrachtet vorauslaufenden Flanke (10) des Zahnsteges (8) kleiner ist als im Bereich der nachlaufenden Flanke (11) desselben,
- das Maßverhältnis aus der auf der Mantelfläche gemessenen Breite der Nuten (7) und der größten Tiefe derselben gleich oder größer als 3:1 ist, und
- das Maßverhältnis aus der Breite der Kammfläche (9) der Zahnstege (8) und dem Kleinstmaß der Nuttiefe den Wert 2:1 nicht übersteigt, und das Kleinstmaß der Nuttiefe 0,5 mm nicht unterschreitet.

2. Vorrichtung nach Anspruch 1, **dadurch gekennzeichnet,** daß die vorauslaufende Flanke (10) der Zahnstege (8) mit den zugehörigen Kammflächen (9) derselben einen Winkel von kleiner als 90° einschließen.

3. Vorrichtung nach Anspruch 1 oder 2 **dadurch gekennzeichnet,** daß die Grundfläche (12) jeder Nut (7) mit der vorauslaufenden Flanke (10) der Zahnstege (8) einen Winkel von im wesentlichen 90° einschließt.

4. Vorrichtung nach einem der Ansprüche 1 bis 3,

**dadurch gekennzeichnet,**

daß die nachlaufende Flanke (11) der Zahnstege (8) mit der zugehörigen Kammfläche (9) derselben einen Winkel von größer als 90° einschließt.

5. Vorrichtung nach einem der Ansprüche 1 bis 4,

**dadurch gekennzeichnet,**

daß die Übergangsbereiche zwischen den die Nut (7) begrenzenden Flanken (10 und 11) und der Grundfläche (12) der Nut (7) durch Radien gebildet werden.

6. Vorrichtung nach einem der Ansprüche 2 bis 5,

**dadurch gekennzeichnet,**

daß die Grundfläche (12) der Nuten (7) aus einem elastischen Werkstoff geformt ist.

*Fig.1*

*Fig. 2*